(19) Europäisches Patentamt
European Patent Office
Office européen des brevets

(11) EP 1 914 726 A1

(12) EUROPEAN PATENT APPLICATION

(43) Date of publication:
23.04.2008 Bulletin 2008/17

(51) Int Cl.:
G10L 21/02 (2006.01)     H04M 1/725 (2006.01)

(21) Application number: 06122359.0

(22) Date of filing: 16.10.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK RS

(71) Applicant: SiTel Semiconductor B.V.
5215 MV 's-Hertogenbosch (NL)

(72) Inventor: Helsloot, Michiel A.
5231 HD 's-Hertogenbosch (NL)

(74) Representative: van Westenbrugge, Andries
Nederlandsch Octrooibureau
Postbus 29720
2502 LS Den Haag (NL)

(54) **base station of a telephone system and telephone system comprising such as a base station**

(57)     The invention relates to a base station (BS) of a telephone system for setting up a telephone connection with a receiving party being arranged to communicate with at least one handset (HS). The base station (BS) is arranged to receive a first signal from a first microphone associated with one of the base station (BS) and the at least one handset (HS). The base station (BS) is arranged to receive a second signal from a second microphone other than from which the first signal is received. The base station (BS) comprises a subtracter (SU) and an adaptive finite impulse response filter (FIR) and is arranged to subtract the second signal from the first signal after the second signal is being processed by an adaptive finite impulse response filter (FIR). This results in a processed first signal that is to be transmitted by the base station (BS) to the receiving party.

Fig 4

EP 1 914 726 A1

## Description

TECHNICAL FIELD

The invention relates to a base station of a telephone system for setting up a telephone connection with a receiving party and a telephone system, comprising such a base station.

STATE OF THE ART

Despite the advent of the mobile phone (cellular phone), ordinary 'in-house telephones' are still commonly used for domestic or corporate purposes. To increase the user-friendliness, these telephones are often cordless telephones (portable telephones), for instance according to the Digital Enhanced Cordless Telecommunications ETSI-standard for digital cordless telephones. The specifications of such cordless telephones are known to a skilled person.

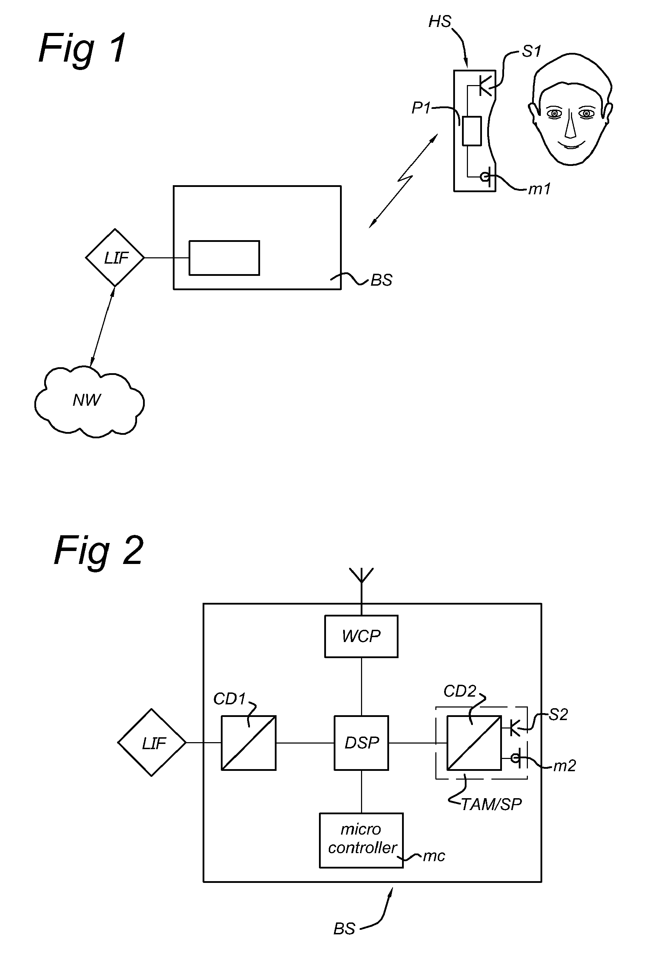

Such cordless telephone systems comprise a base station and at least one portable handset that is arranged to communicate with the base station, for instance via a wireless (cordless) communication link. Fig. 1 schematically shows a cordless telephone system according to the prior art comprising a base station BS and a portable handset HS. The handset HS comprises a processing unit P1, and has a microphone M1 and a speaker S 1 associated with it. The microphone M 1 and the speaker S 1 may be comprised by the handset HS, but may also one or two remote components arranged to communicate with the processing unit P1 via a wireless or wired communication link (for instance using Bluetooth).

The microphone M1 is arranged to detect sound and transmit a signal representing the detected sound to the processing unit P1. The processing unit P1 is arranged to transmit this signal to the base station BS, for instance via a wireless communication link. The processing arrangement P1 is further arranged to receive a signal from the base station BS and transmit this signal to the speaker S1. The speaker S 1 is arranged to generate a sound signal based on the received signal.

It will be understood that the handset HS may be arranged to carry out all kinds of suitable signal processing steps, such as analogue-to-digital conversion, digital-to-analogue conversion, filtering to increase the quality of the signal, etc. Filtering may for instance be done to filter out energy that is outside the frequency band normally used for speech, such as very high or low sounds. For instance, the filter may filter out frequencies below 100 or 300 Hz and frequencies above 3400 or 7200 Hz. This may be done to comply to PSTN transmission characteristics. The base station BS may comprise all kinds of hardware and/or software components arranged to receive and transmit signals representing sound from and to the handset HS. The base station BS is further arranged to communicate with a suitable network NW, e.g. via a line interface LIF, for instance interfacing network NW, which may be the public switched telephone network (PSTN), Vioce over IP (VoIP), (asymmetric) digital subscriber line ((A)DSL), integrated services digital network (ISDN). A base station BS according to the prior art will be discussed in more detail below with reference to Fig. 2.

Cordless telephones are often used in situations with a lot of background noise. Examples of such background noise are: a TV set, radio (music), background conversation, street noise. These forms of background noise all have speech-like properties and have relatively much energy in the same frequency band as normal speech. As such, standard filtering will not improve the signal-to-noise ratio (SNR) much, as these standard filtering techniques usually filter out energy outside the frequency band used for speech.

It is an object of the invention to provide a base station and telephone system that increases the signal-to-noise ratio.

SHORT DESCRIPTION

According to an aspect there is provided a base station of a telephone system for setting up a telephone connection with a receiving party, the base station being arranged to communicate with at least one handset and the base station being arranged to receive a first signal from a first microphone associated by one of the base station and the at least one handset that is to be transmitted by the base station to the receiving party, characterized in, that the base station is further arranged to receive a second signal from a second microphone other than from which the first signal is received, the base station further comprises a subtracter and an adaptive finite impulse response filter, and the subtracter is arranged to subtract the second signal from the first signal after the second signal is being processed by an adaptive finite impulse response filter, resulting in a processed first signal that is to be transmitted by the base station to the receiving party.

The first signal may comprise speech that is to be transmitted to the receiving party, and background noise. The second signal may mainly comprise background noise. By subtracting the second signal from the first signal as described, the background noise may at least partially be cancelled from the first signal.

According to an embodiment, the base station further comprises a delay unit to delay one of the first or the second signal to compensate timing differences between the first and the second signal as a result of the wireless transport of at least one of the first and second signal. This makes the base station suitable for use in combination with a wireless system.

According to an embodiment, the adaptive finite impulse response filter is defined by a number of weighing factors and the output of the adaptive finite impulse response filter y(n) at a time n is the weighted sum of second signal (x(n)) at time n and a predetermined number of previous terms of the second signal at times n-1 to n-R where R determines the order of the adaptive finite impulse response filter:

$$y(n) = \sum_{i=0}^{i=R} a_i x(n-i).$$

According to an embodiment, the processed first signal is partially fed back to the adaptive finite impulse response filter to allow optimization of the weighing factors.

According to an embodiment, the base station further comprises an idle detector to detect when the first signal is idle and the base station is arranged to initiate optimization of the weighing factors when the idle detector detects that the first signal doesn't comprise speech. This prevents the system for cancelling speech.

According to an embodiment, the handset comprises the first microphone and the base station comprises the second microphone.

According to an embodiment, the base station comprises the first microphone and the hand set comprises the second microphone.

According to an embodiment, the handset comprises the first microphone and a second hand set comprises the second microphone.

According to an embodiment, a microphone unit comprises the second microphone, the microphone unit further comprising a transmitter to transmit the detected background sound to the base station. This allows microphone units to be positioned at strategic positions with respect to possible background noise sources.

According to an embodiment, the base station is further arranged to receive at least one further signal from at least one further microphone other than from which the first and second signals are received of, the base station further comprising at least one further subtracter and at least one further adaptive finite impulse response filter for each received further signal, the base station being arranged to subtract each further signal from the processed first signal using corresponding subtracter after each further signal is being processed by the corresponding adaptive finite impulse response filter resulting in a further processed first signal that is to be transmitted by the base station to the receiving party. This provides a flexible system, arranged to adapt to changing circumstances. It also allows for a better cancellation, as more information sources (microphones) may be used simultaneously.

According to an embodiment, each adaptive finite impulse response filter is defined by a number of weighing factors.

According to an embodiment, the output of each subtracter is partially fed back to the corresponding adaptive finite impulse response filter to allow optimization of the weighing factors.

According to an embodiment, the at least one further signal originates from the further microphone of a further handset.

According to an embodiment, the at least one further signal originates from a microphone unit comprising a microphone and a transmitter to transmit detected background sound to the base station.

According to an embodiment, the base station is arranged to transmit the resulting processed first signal to the receiving party via a network, which may be one of the public switched telephone network (PSTN), Vioce over IP (VoIP), digital subscriber line (DSL) and asymmetrical digital subscriber line (ADSL).

According to an embodiment, the base station is arranged to transmit the resulting processed first signal to the receiving party being a further handset.

According to an aspect, there is provided a telephone system, comprising a base station according to the above and at least one handset.

SHORT DESCRIPTION OF THE DRAWINGS

Embodiments of the invention will now be described, by way of example only, with reference to the accompanying schematic drawings in which corresponding reference symbols indicate corresponding parts, and in which:

- Figure 1 schematically depicts a cordless telephone system according to the prior art,
- Fig. 2 schematically depicts a base station having telephone answering machine and/or speaker phone functionality according to the prior art,
- Fig. 3 schematically depicts a part of the base station comprising echo cancelling functionality according to the prior art,
- Fig. 4 schematically depicts a base station and a handset according to an embodiment,
- Fig. 5 schematically depicts a base station and two handsets according to a further embodiment, and
- Fig. 6 schematically depicts a base station and a number of handsets according to a further embodiment.

Same reference numbers used in different figures refer to similar components.

DETAILED DESCRIPTION

Fig. 2 shows a base station BS according to the prior art in more detail with respect to Fig. 1. The base station BS may comprise a wireless communication processor WCP, a digital signal processor DSP, a microcontroller MC, a line interface LIF and a first CODEC CD1 and a second CODEC CD2.

The heart of the base station BS is formed by the digital signal processor DSP. Signals received via the line interface LIF may be transferred to the digital signal processor DSP via the first CODEC CD1, the first CODEC CD1 performing analog-to-digital conversion (ADC). The digital signal processor DSP may transmit such a received signal to the wireless communication processor WCP to be transmitted to a handset HS.

It will be understood that instead of a line interface LIF other interfaces may be used, depending on the type of network that is interfaced.

Signals transmitted by the handset HS to the base station BS may travel via the wireless communication processor WCP, the digital signal processor DSP and the first CODEC CD1 to the line interface LIF. In this case the first CODEC CD1 performs digital-to-analog (DAC) conversion.

The above actions are being controlled by the microcontroller MC. The microcontroller MC may for instance control the digital signal processor DSP in such a way as to allow the base station BS to simultaneous set up a communication link with more than one handset HS by using techniques like frequency division multiple access (FDMA), time division multiple access (TDMA) and time division duplex (TDD).

Often, the base station BS comprises more functionality and may for instance also be used as a telephone itself, for instance a speaker phone SP or as a telephone answering machine TAM. In both cases, the base station BS may further comprise a speaker S2 and a microphone M2 connected to the digital signal processor DSP via second CODEC CD2 as is shown in Fig. 2 in the dashed box.

In some cases, where the base station BS has no line interface LIF the first and second CODEC CD1, CD2 may be one and the same CODEC, as will be understood by skilled person.

In case the base station BS is used as a telephone answering machine, the base station BS may only comprise speaker S2. In case the base station BS is used as a speaker phone, the base station BS also comprises microphone M2.

In case the base station BS is used as a telephone, it may for instance be used as a speaker phone SP. In such a case, the base station BS may further comprise an echo canceller to prevent acoustic feedback, as the microphone M2 picks up the sound generated by the speaker S2. Such an echo canceller may comprise an adaptive finite impulse response filter FIR, being a type of digital filter, known to a skilled person. The output signal y(n) of such a filter at a time n, is the weighted sum (weighing factors $a_i$) of the input signal x(n) at time n and a predetermined number of 'older' input signals at times n-1 to n-R where R determines the order of the filter:

$$y(n) = \sum_{i=0}^{i=R} a_i x(n-i).$$

The use of adaptive finite impulse filters FIR for use in an echo canceller is for instance decriped in S. Haykin, Adaptive Filter Theory, 4th, Prentice-Hall, 2002, and B. Farhang-Boroujeny, Adaptive Filters Theory and Applications, 1998.

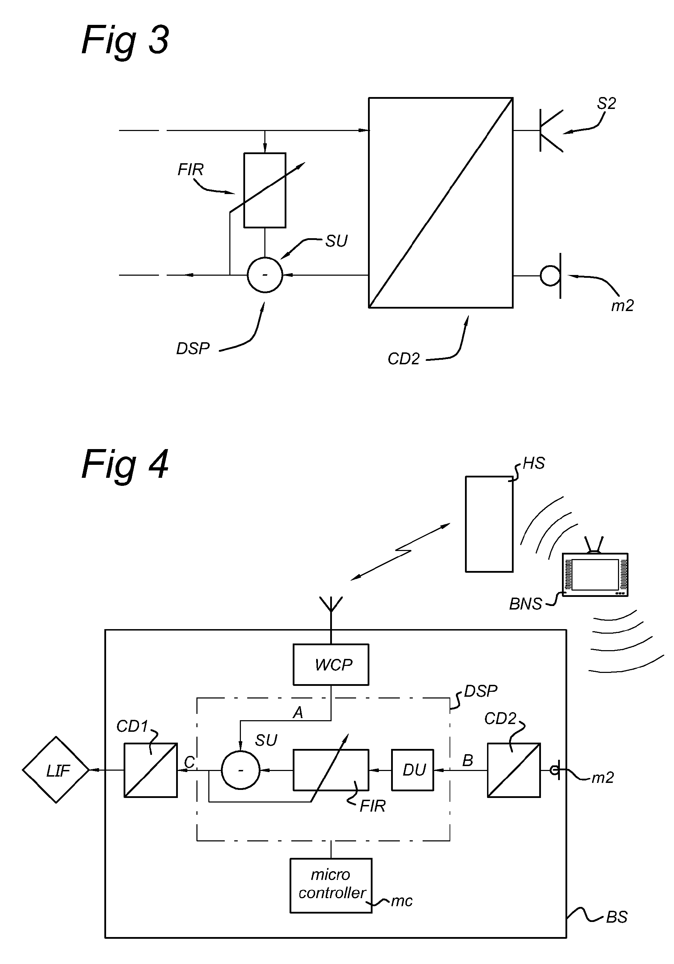

A more detailed view of such an echo canceller is schematically depicted in Fig. 3. Fig. 3 shows the speaker S2 and the microphone M2 of the base station BS being connected, via the second CODEC CD2 to the digital signal processor DSP. The digital signal processor DSP now further comprising the functionality of an echo canceller. The digital signal processor DSP comprises an adaptive finite impulse response filter FIR and a subtracter SU.

The digital signal processor DSP receives a speaker signal from the line interface LIF that is to be transmitted via the second CODEC CD2 to the handset HS to be reproduced by the speaker S2. The speaker S2 generates a sound based on the speaker signal.

When used as a speaker phone, the sound generated by the speaker S2 is relatively loud, so it may be registered by the microphone M2. The microphone signal coming from the microphone M2 entering the digital signal processor DSP via the second CODEC CD2 comprises two components:

1) sound that is to be transmitted via the line interface LIF (for instance speech from the user), and
2) sound that is picked up from the speaker S2.

In order to prevent acoustic feedback, this second term is to be removed from the microphone signal. This removal can not simply be done by subtracting the incoming speaker signal from the microphone signal, as the second term from the microphone signal is not identical to the incoming speaker signal, as a result of delays, echos, deformation and the like.

Removal is done by splitting the incoming speaker signal and feeding part of the speaker signal to the adaptive finite impulse response filter FIR. The output of the adaptive finite impulse response filter FIR is subtracted from the microphone signal using subtracter SU. By subtracting the output of the adaptive finite impulse response filter FIR from the microphone signal, sound picked up by the microphone M2 from the speaker S2 is cancelled.

The weighing factors $a_i$ may be set in such a way that the deformation or distortion of the sound picked up by the microphone M2 from the speaker S2 due to the fact that it has travelled from the speaker S2 to the microphone M2 is accounted for. The deformation may include echos, delays, deformation of frequency spectrum etc.

The weighing factors $a_i$ may be set on the spot by feeding back the output of the substractor SU to the adaptive finite impulse response filter FIR. This way, the weighing factors $a_i$ of the adaptive finite impulse response filter FIR may be optimized on the spot. Of course,

the weighing factors $a_i$ may also be predetermined and be set during manufacturing of the base station BS.

The weighing factors $a_i$ may be adjusted when no sound that is to be transmitted via the line interface LIF is present (so when the user doesn't speak), so setting the weighing factors may be done by minimizing the output of the subtracter SU. An idle detector may be provided to determine whether or not sound that is to be transmitted via the line interface LIF is present. Such an idle detector or voice activity detector is known to a skilled person and can be used to control updating of weighing factors $a_i$ and calculation of additional other forms of noise suppression.

Such an idle detector or voice activity detector may be part of a stepsize control mechanism for the adaptive finite impulse response filter FIR or a be part of any another subsystem that is controlled by voice levels in the application.

The skilled person will understand that idle detectors are standard parts of echo cancellers these days.

As described above, the base station BS may be arranged to communicate with a handset HS, comprising a processing unit P1, and has a microphone M1 and a speaker S 1 associated with it. The microphone M 1 and the speaker S 1 may be comprised by the handset HS, but may also one or two remote components arranged to communicate with the processing unit P1 via a wireless or wired communication link (for instance using Bluetooth).

EMBODIMENT 1

Fig. 4 schematically shows an embodiment of the invention, showing a base station BS, arranged to communicate with a handset HS. Also shown is a background noise source BNS, in this example depicted by a television set. It will be understood that also other kinds of background noise sources BNS may be present.

According to the embodiment, the base station BS comprises a first CODEC CD1, a digital signal processor DSP, a second CODEC CD2, a wireless communication processor WCP and a microcontroller MS, as also shown in Fig. 2. The base station BS further comprises a microphone M2 connected to the second CODEC CD2. The speaker S2 shown in Fig. 2 is not necessary for the embodiment described here.

The digital signal processor DSP further comprises an adaptive finite impulse response filter FIR, a subtracter SU, and a delay unit DU.

According to the embodiment described here, the microphone M2 of the base station BS is used to pick up background noise. The detected background noise is fed to the digital signal processor DSP and is used to remove this background noise from the signal received from the handset HS by the wireless communication processor WCP that is to be transmitted to another telephone via the line interface LIF.

According to this embodiment, it is assumed that the background noise source BNS is detected by the microphone M2 of the base station BS as well as the microphone M1 of the handset HS. This is for instance the case when the handset HS and the base station BS are in the same room or in adjacent rooms or so and are both within earshot of the background noise source. For instance, when a handset HS is used in a factory building, both the base station BS and the handset HS may experience the same background noise, generated by heavy machines, even when they are in different rooms.

The functioning of the embodiment shown in Fig. 4 will now be explained in more detail.

The base station BS is arranged to receive a first signal A from a handset HS via the wireless communication processor WCP. This first signal A comprises speech, produced by a user and noise, at least partially produced by the background noise source BNS. First signal A is fed to the digital signal processor DSP.

The base station BS is further arranged to receive a second signal B from microphone M2. This second signal B comprises noise, at least partially produced by the background noise source BNS. Second signal B is fed to the digital signal processor DSP. Of course, second signal B may also comprise speech produced by the user, but it is assumed that this may be neglected.

Second signal B is subtracted from first signal A by subtracter SU resulting in a processed first signal C, from which at least part of the noise produced by the background noise source BNS is removed. However, first, second signal B is being processed by the digital signal processor DSP to take into account differences between the background noise in first signal A and second signal B, for instance caused by timing differences, echo's, deformation etc.

This processing of second signal B may be done by delay unit DU and adaptive finite impulse response filter FIR. Second signal B as received from the microphone M2 is therefore first fed to the delay unit DU to take into account timing differences between the background noise present in first signal A and second signal B. The delay unit DU may for instance take into account the delay of the background noise of first signal A as a result of the wireless transport of first signal A between the handset HS and the base station BS. This wireless transport delay may be inherent to the type of wireless communication that is used, for instance buffering first signal A and transmitting it in bursts. The wireless transport delay may for instance be 4 - 10 msec. The value of the delay may be derived directly from transmission frame timing and may be constant during connections.

Further timing differences caused by differences in the acoustic path between the background noise source BNS and the handset HS and base station BS respectively may be compensated for in the adaptive finite impulse response filter FIR described below.

Next, the delayed second signal B is fed to the adaptive finite impulse response filter FIR to take into account further timing differences. The adaptive finite impulse response filter FIR may further take into account further differences between the noise in first signal A and the second signal B caused by the fact that they reached the digital signal processor DSP via different routes. These differences may be caused by deformation and/or echo's of the background noise when travelling from the background noise source BNS to the microphone M1 of the handset HS and the microphone M2 of the base station BS.

The adaptive finite impulse response filter FIR is already explained above with reference to the prior art. The output of the adaptive finite impulse response filter FIR is subtracted from first signal A by subtracter SU, resulting in processed first signal C.

As already described above, the weighing factors $a_i$ of the adaptive finite impulse response filter FIR may be adjusted to the situation. In order to do so, processed first signal C is fed back to the adaptive finite impulse response filter FIR. The weighing factors $a_i$ may only be adjusted when no speech that is to be transmitted via the line interface LIF (for instance speech from the user) is present in first signal A. In order to determine whether or not speech is present in first signal A, an idle detector may be present, as described above.

It will be understood that idle detectors or voice activity detectors (VAD) are known and may be designed in many different ways. For instance, the voice activity detector may calculate a long time average (background noise estimation) and a short time average (active voice estimation) and it compares the signal levels together with some minimum thresholds. Using the short time average and the long time average, it can be determined whether or not the user actually speaks or not.

Other voice activity detectors VAD could make comparisons based on 'kurtosis' (measure for 'speech-likeness' of a signal) and other statistical characteristics, such as sparseness, which is a measure for the non-stationairy character of speech, i.e. short breaks during speech. It will be understood that many different voice activity detectors are known, and are therefore not described here in full detail.

As a result, the signal transmitted to another party via the line interface LIF comprises less background noise, making it better intelligible for the receiving party.

One of the advantages of the embodiment described here, is that hardware may be used that may already be present in state of the art base stations BS, such as microphone M2, CODEC CD2, adaptive finite impulse response filter FIR and subtracter SU. According to the prior art, these hardware elements were used to provide the base station BS with the functionality of a telephone answering machine TAM, speaker phone, and echo canceller. By using these hardware elements, the base station BS doesn't need to be provided with additional hardware elements and it is not necessary to increase the size of the base station BS and/or to substantially increase the production costs of the base station BS.

It will be understood that the microcontroller MC may be any kind of controller that may be programmed to control the hardware elements of the base station BS to perform the functionality as described above. The microcontroller MC may be arranged to communicate with memory (not shown) comprising programming instructions readable and executable by the microcontroller MC to control the hardware elements of the base station BS to perform this functionality.

EMBODIMENT 2

It will be understood that the base station BS may be arranged to communicate with more than one handset HS at the same time. The wireless communication processor WCP may comprise all kinds of functionality to do this, such as frequency division multiplexing, time division multiplexing functionality known to a person skilled in the art.

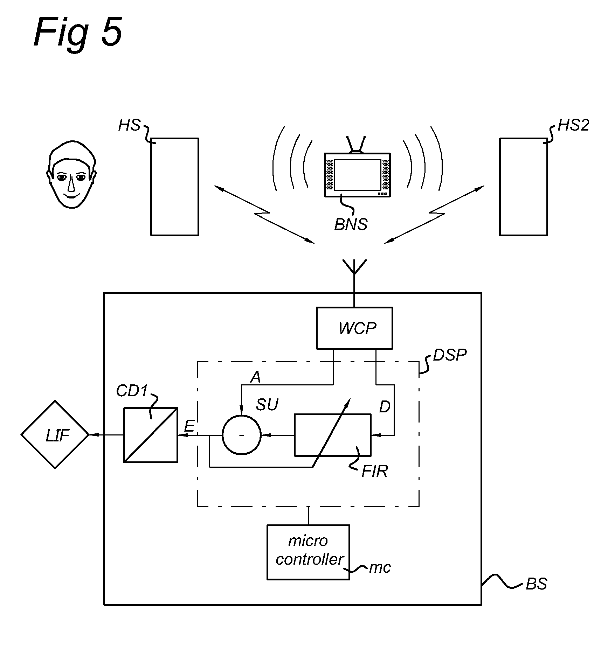

Fig. 5 schematically depicts base station BS that is arranged to communicate with a first handset HS and a second handset HS2.

According to this embodiment, the first handset HS and the second handset HS2 are both within earshot of the background noise source BNS, such as for instance a television set. The first handset HS is being used by a user to make a telephone conversation. The second handset HS2 is not in use, i.e. it is in an idle state.

The first handset communicates with the base station BS via wireless communication processor WCP. Just as in the example described above with reference to Fig. 4, the wireless communication processor WCP receives and outputs first signal A, comprising speech, produced by the user and noise, at least partially produced by the background noise source BNS. First signal A is fed to the digital signal processor DSP.

The base station BS is further arranged to receive a second signal D from second handset HS2 via the wireless communication processor WCP. This second signal D comprises noise, at least partially produced by the background noise source BNS. Second signal D is fed to the digital signal processor DSP. Of course, second signal D may also comprise speech produced by the user, but it is assumed that this may be neglected.

Second signal D is subtracted from first signal A by subtracter SU resulting in a processed first signal E from which at least part of the noise produced by the background noise source BNS is removed. However, first, second signal D is being processed by the digital signal processor DSP to take into account differences between the background noise in first signal A and second signal D, for instance caused by timing differences, echo's, deformation etc.

This processing may be done by feeding second signal D to an adaptive finite impulse response filter FIR in a similar way as described above with reference to Fig. 4. In this case, the delay unit DU may be omitted as according to this embodiment, both first signal A and second signal D experience a similar wireless transport delay.

However, according to a variant, delay units DU may be provided for both signal A and D to be able to compensate for small timing differences between A and D as a result of the wireless transmission technique used. For instance, TDMA (time division multiple access) structures often introduce small timing differences between different signals, depending on which timeslot is used for which transmission. As a result, signal A may be delayed with respect to signal D as a result of the wireless transmission, so signal D needs to be delayed using a delay unit DU to compensate for this, or vice versa.

Again the output of the adaptive finite impulse response filter FIR is subtracted from first signal A by subtracter SU, resulting in a processed first signal E.

As already described above, the weighing factors $a_i$ of the adaptive finite impulse response filter FIR may be adjusted to the situation. In order to do so, processed first signal E is fed back to the adaptive finite impulse response filter FIR. The weighing factors $a_i$ may only be adjusted when no speech that is to be transmitted via the line interface LIF (for instance speech from the user) is present in first signal A. In order to determine whether or not speech is present in first signal A, an idle detector may be present, as described above.

As a result, the signal transmitted to another party via the line interface LIF comprises less background noise, making it better intelligible for the receiving party.

One of the advantages of the embodiment described here is that hardware may be used that may already be present in state of the art cordless telephone systems, such as a base stations BS, two or more handsets HS, HS2, and an adaptive finite impulse response filter FIR and subtracter SU.

It will be understood that the microcontroller MC may be any kind of controller that may be programmed to control the hardware elements of the base station BS to perform the functionality as described above. The microcontroller MC may be arranged to communicate with memory (not shown) comprising programming instructions readable and executable by the microcontroller MC to control the hardware elements of the base station BS to perform this functionality.

It will be understood that according to a further variant, more handsets may be used to pick up background noise that is to be cancelled. This will be further explained in the next embodiment.

EMBODIMENT 3

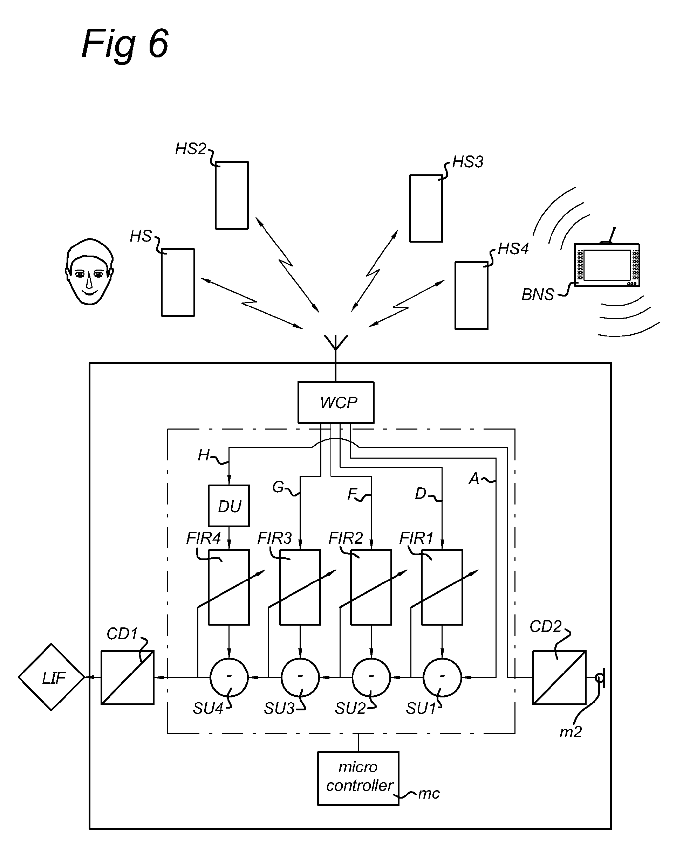

Fig. 6 schematically depicts a base station BS according to a further embodiment. According to this embodiment the background noise may be suppressed by using more than one microphone to detect background noise. So, instead of just using microphone M2 from the base station BS or just one microphone from a second handset HS2, one or more microphones may be used from the base station BS as well as microphones from one or more handsets HS2, HS3, HS4.

According to the embodiment shown in Fig. 6, a first handset HS may be used by a user to make a telephone call, while three further handsets HS2, HS3, HS4 are in an idle state and may be used to pick up background noise which may be cancelled. Also, the microphone M2 from the base station BS may be used to pick up background noise.

Fig. 6 shows that the digital signal processor DSP now comprises a number of adaptive finite impulse response filters FIRj and subtracters SUi positioned in series (i, j = 1, 2, 3, ...).

First signal A received from the first handset HS (in use) is fed to a first substractor SU1. Second signal D, received from second handset HS2 is subtracted by first substractor SU1 from first signal A after being processed by a first adaptive finite impulse response filter FIR1.

Next, further signal F, received from a third handset HS3 is subtracted by second subtracter SU2 from the output of the first subtracter SU1 after being processed by a second adaptive finite impulse response filter FIR2. Next, further signal G, received from a fourth handset HS4 is subtracted by third subtracter SU3 from the output of the second substractor SU2 after being processed by a third adaptive finite impulse response filter FIR3. Finally, further signal H, as received from the microphone M2 from the base station BS is substracted by the fourth subtracter SU4 from the output of the third subtracter SU3 after being processed by delay unit DU and fourth adaptive finite impulse response filter FIR4.

According to this embodiment, all idle handsets and the base station BS may be used to detect background noise. It will be understood that microphones that are relatively far removed (or acoustically isolated) from the handset HS in use can not be used to cancel background noise. For these microphones, the weighing coefficients will be close to zero.

Since the weighing coefficients may be determined and adjusted constantly (when no speech is detected by idle detector) the system is able to adapt to changing circumstances, for instance a user who walks with the handset HS in use from one room to another room.

It will be understood that the adaptation of the weighing factors is an inherent function of the adaptive finite impulse response filter FIR as used in for instance an echo canceller. It will be understood by a skilled person that the digital signal processor DSP will control the adjustment of the weighing factors.

It will be understood that in all described embodiments, microcontroller MC may be arranged to control the hardware elements of the base station BS in such a way that the above described functions are performed. The microcontroller MC may be arranged to communicate with a memory (not shown) comprising program lines readable and executable by the microcontroller MC to perform the functions as described above. For instance, in the third embodiment, the microcontroller MC may be arranged to determine which handset HS (or the base station BS) is in fact used as a telephone and which ones of the handsets HS and base station BS may be used to reduce background noise in the signal that is outputted by the base station BS.

Further remarks

It will be understood that the above described embodiments are all examples of a more general principle, i.e. using microphones that are part of the cordless telephone (portable telephone) system (comprising a base station BS and one or more handsets HS) to detect background noise and use this detected background noise, to reduce the amount of background noise present in the signal that is transmitted by the cordless telephone system via the line interface LIF.

So, in case a telephone call is made with a first handset HS, the microphones of the other handsets and/or the base station BS may be used to detect background noise. If the base station BS is used as a (handsfree) telephone itself, the microphones of one or more handsets HS1, HS2, HS3, HS4 may be used to detect background noise. The background noise is suppressed using one or more adaptive finite impulse response filters FIRj, subtracters SUi (where i, j = 1, 2, 3, ...) and possibly a delay unit DU.

The microcontroller MC may be arranged to determine on a case by case basis which components of the cordless telephone system are used for telephone conversations and which components are not used and may therefore be used to register background noise.

It will be understood that the embodiments as described here may also be used when a first handset HS is making a telephone call with a second handset HS2 both being associated with the same base station BS (internal call). In this case, the microcontroller MC may decide which further microphones may be used to detect background noise for suppressing the background noise in the transmitted signals.

It will be understood that any number of microphones may be used to detect background noise. According to the example given here, the microphones are situated in handsets HS or the base station BS, however, it will be understood that also other microphones may be used. For instance, dedicated microphone units may be provided comprising a microphone and a transmitter to transmit detected background sound to the base station BS for cancellation. Such dedicated microphone units may be positioned in the vicinity of a handset HS or the background noise source BNS. The microphones may be positioned in- or outside the house.

It will be understood that instead of the wireless communication processor WCP any kind of input-output device may be provided that allows communication with the base station BS and the handset HS or microphone units. In fact, communication between the handset HS and the base station BS may also be done via a wired communication link. So, instead of using a cordless telephone system, also a wired telephone system may be used. In fact any kind of (in house) telephone system may be used.

Also, according to the embodiments described the output of each subtracter (SUi) is partially fed back to the corresponding adaptive finite impulse response filter (FIRj) to allow optimization of the weighing factors $(a_i)$. It will be understood that this feedback may be done directly, or indirectly, i.e. via additional processing blocks, to optimize the adaptation loop.

The above description explains how hardware and/or software of an echo canceller and a second microphone may be used to cancel background noise. A first microphone (in the handset or base station BS used to telephone with) is used to record speech and background noise. A second microphone (in an idle handset HS or base station BS) records only background noise. The background noise recorded by the second microphone is subtracted via an adaptive filter from the speech and background noise recorded by the first microphone.

This system could be implemented on a base station BS, for instance on a TAM base station where the base station microphone is used to record the background noise.

The system is also applicable in situations in which the noise is at least partially in the same frequency band as used for speech. In such cases, traditional filtering of energy that is outside the frequency band normally used for speech, such as very high or low frequencies is not an effective solution to increase the intelligibility of the transmitted sound.

The descriptions above are intended to be illustrative, not limiting. Thus, it will be apparent to one skilled in the art that modifications may be made to the invention as described without departing from the scope of the claims set out below.

**Claims**

1. Base station (BS) of a telephone system for setting up a telephone connection with a receiving party, the base station (BS) being arranged to communicate with at least one handset (HS) and the base station (BS) being arranged to receive a first signal from a first microphone associated by one of the base station (BS) and the at least one handset (HS) that is to be transmitted by the base station (BS) to the receiving party,
   **characterized in, that**
   the base station (BS) is further arranged to receive a second signal from a second microphone other than from which the first signal is received,
   the base station (BS) further comprises a subtracter (SU) and an adaptive finite impulse response filter (FIR), and

the subtracter (SU) is arranged to subtract the second signal from the first signal after the second signal is being processed by an adaptive finite impulse response filter (FIR), resulting in a processed first signal that is to be transmitted by the base station (BS) to the receiving party.

2. Base station (BS) according to claim 1, wherein the base station (BS) is arranged to communicate wirelessly with the at least one handset (HS).

3. Base station (BS) according to claim 2, further comprising a delay unit (DU) to delay one of the first or the second signal to compensate timing differences between the first and the second signal as a result of the wireless transport of at least one of the first and second signal.

4. Base station (BS) according to any one of the preceding claims, wherein the adaptive finite impulse response filter is defined by a number of weighing factors ($a_i$) and the output of the adaptive finite impulse response filter y(n) at a time n is the weighted sum of second signal ($x(n)$) at time n and a predetermined number of previous terms of the second signal at times n-1 to n-R where R determines the order of the adaptive finite impulse response filter:

$$y(n) = \sum_{i=0}^{i=R} a_i x(n-i).$$

5. Base station (BS) according to claim 4, wherein the processed first signal is partially fed back to the adaptive finite impulse response filter (FIR) to allow optimization of the weighing factors ($a_i$).

6. Base station (BS) according to claim 5, wherein the base station (BS) further comprises an idle detector to detect when the first signal is idle and the base station (BS) is arranged to initiate optimization of the weighing factors ($a_i$) when the idle detector detects that the first signal doesn't comprise speech.

7. Base station (BS) according to any one of the preceding claims, wherein the handset (HS) comprises the first microphone (M1) and the base station (BS) comprises the second microphone (M2).

8. Base station (BS) according to any one of the claims 1 - 6, wherein the base station (BS) comprises the first microphone (M1) and the hand set (HS) comprises the second microphone (M2).

9. Base station (BS) according to any one of the claims 1 - 6, wherein the handset (HS) comprises the first microphone (M1) and a second hand set (HS2) comprises the second microphone (M2).

10. Base station (BS) according to any one of the claims 1 - 6, wherein a microphone unit comprises the second microphone (M2), the microphone unit further comprising a transmitter to transmit the detected background sound to the base station (BS).

11. Base station (BS) according to any one of the preceding claims, wherein the base station (BS) is further arranged to receive at least one further signal from at least one further microphone other than from which the first and second signals are received of, the base station (BS) further comprising at least one further subtracter (SUi) and at least one further adaptive finite impulse response filter (FIRj) for each received further signal,
the base station (BS) being arranged to subtract each further signal from the processed first signal using corresponding subtracter (SUi) after each further signal is being processed by the corresponding adaptive finite impulse response filter (FIRj) resulting in a further processed first signal that is to be transmitted by the base station (BS) to the receiving party.

12. Base station according to claim 11, wherein each adaptive finite impulse response filter is defined by a number of weighing factors ($a_i$).

13. Base station according to claim 12, wherein the output of each subtracter (SUi) is partially fed back to the corresponding adaptive finite impulse response filter (FIRj) to allow optimization of the weighing factors ($a_i$).

14. Base station (BS) according to any one of the claims 11 - 13, wherein the at least one further signal originates from the further microphone of a further handset (HS).

15. Base station (BS) according to any one of the claims 1 - 13, wherein the at least one further signal originates from a microphone unit comprising a microphone and a transmitter to transmit detected background sound to the base station (BS).

16. Base station (BS) according to any one of the preceding claims, wherein the base station (BS) is arranged to transmit the resulting processed first signal to the receiving party via a network (NW), which may be one of the public switched telephone network (PSTN), Vioce over IP (VoIP), digital subscriber line (DSL) and asymmetrical digital subscriber line (ADSL).

17. Base station (BS) according to any one of the claims 1 - 16, wherein the base station (BS) is arranged to transmit the resulting processed first signal to the receiving party being a further handset (HS).

18. Telephone system, comprising a base station (BS) according to any one of the preceding claims and at least one handset (HS).

# Fig 1

# Fig 2

## Fig 3

## Fig 4

# Fig 5

# Fig 6

**EP 1 914 726 A1**

## EUROPEAN SEARCH REPORT

European Patent Office

Application Number

EP 06 12 2359

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 675 365 A (BROADCOM CORP [US]) 28 June 2006 (2006-06-28) <br><br> * page 2, paragraphs 2,3,7-9 * <br> * page 7, paragraph 46-49 * <br> * page 8, paragraphs 62,63 * <br> * page 11, paragraph 96 * <br> ----- | 1-3, 7-10, 14-18 | INV. <br> G10L21/02 <br> H04M1/725 |
| X | WO 2006/066618 A (FREESCALE SEMICONDUCTOR INC [US]; MCANDREW PATRICK [GB]; COMPS CHRISTO) 29 June 2006 (2006-06-29) | 1-10, 14-18 | |
| Y | * the whole document * <br> ----- | 11-13 | |
| Y | EP 0 411 360 A1 (BLAUPUNKT WERKE GMBH [DE]) 6 February 1991 (1991-02-06) * column 1, line 44 - column 2, line 50; figure 2 * <br> ----- | 11-13 | |
| A | EP 0 856 834 A (NIPPON ELECTRIC CO [JP]) 5 August 1998 (1998-08-05) * page 2, lines 41-55 * <br> ----- | 1-18 | TECHNICAL FIELDS SEARCHED (IPC) |
| A | WIDROW B ET AL: "ADAPTIVE NOISE CANCELLING: PRINCIPLES AND APPLICATIONS" PROCEEDINGS OF THE IEEE, IEEE. NEW YORK, US, <br> vol. 63, no. 13, <br> 1 December 1975 (1975-12-01), pages 1692-1716, XP000567974 <br> ISSN: 0018-9219 <br> page 1693, section III, figure 1 <br> page 1704, section D, figure 18 <br> ----- | 1-18 | G10L <br> H04M |

The present search report has been drawn up for all claims

| Place of search | Date of completion of the search | Examiner |
|---|---|---|
| The Hague | 16 March 2007 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 914 726 A1**

## ANNEX TO THE EUROPEAN SEARCH REPORT
## ON EUROPEAN PATENT APPLICATION NO.

EP 06 12 2359

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2007

| Patent document cited in search report | | Publication date | Patent family member(s) | | Publication date |
|---|---|---|---|---|---|
| EP 1675365 | A | 28-06-2006 | CN | 1794757 A | 28-06-2006 |
| | | | CN | 1794758 A | 28-06-2006 |
| | | | US | 2006133621 A1 | 22-06-2006 |
| WO 2006066618 | A | 29-06-2006 | NONE | | |
| EP 0411360 | A1 | 06-02-1991 | DE | 3925589 A1 | 14-02-1991 |
| | | | JP | 3070324 A | 26-03-1991 |
| EP 0856834 | A | 05-08-1998 | AU | 727476 B2 | 14-12-2000 |
| | | | AU | 5278798 A | 06-08-1998 |
| | | | CA | 2228121 A1 | 29-07-1998 |
| | | | JP | 2930101 B2 | 03-08-1999 |
| | | | JP | 10215194 A | 11-08-1998 |
| | | | US | 5978824 A | 02-11-1999 |

EPO FORM P0459

For more details about this annex : see Official Journal of the European Patent Office, No. 12/82

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. HAYKIN.** Adaptive Filter Theory. Prentice-Hall, 2002
- **B. FARHANG-BOROUJENY.** Adaptive Filters Theory and Applications. 1998